# EUROPEAN PATENT APPLICATION

(11) **EP 4 681 539 A1**
(43) Date of publication of application: **21.01.2026**
(21) Application number: 25189309.5
(22) Date of filing: 14.07.2025
(51) Int. Cl.: A21C 9/02, F26B 15/12

(54) **A LONG PASTA PRODUCTION PLANT**

(30) Priority: 18.07.2024 IT 202400016669
(71) Applicant: Anselmo Impianti S.r.l., 40121 Bologna BO (IT)
(72) Inventor: ANSELMO, Fabrizio, 12041 Bene Vagienna (CN) (IT)
(74) Representative: Trentin, Michele

(57) **Abstract**

A long pasta production plant comprising: a first long pasta forming area **(2);** a second long pasta spreading area **(10)** generated on support sticks **(11)** each having two free ends; a third area **(14)** for pre-drying and drying the long pasta comprising a handling group **(15)** of the sticks **(11)** operatively connected to a pair of support chains **(16)** for the two free ends of the sticks **(11).** The sticks **(11)** have a longitudinal extension greater than 2550 mm and the handling group **(15)** comprises a first thrust kinematics **(18)** of the chains **(16)** and a second traction kinematics **(19)** of the chains **(16).**

## Description

### Field of application

The present invention is applicable to the food sector and relates to pasta production.

In more detail, the present invention refers to a long pasta production plant.

### State of the art

In the field of industrial pasta production, plants are known in which there is a first dough preparation area where the ingredients are first mixed in a special bowl and then, once the dough itself is homogeneous and has the correct consistency, transport it inside a duct provided with a screw that compresses it towards a die through which the pasta is given the desired shape. To complete the pasta preparation process, a cutting element is arranged near the die that allows the pasta to be cut to the desired length.

Once the pasta has been formed, it is moved on to the drying area. In detail, in known plants the short pasta is placed on conveyor belts or on frames, typically perforated, which are then transported inside the pre-drying oven before and the actual drying oven afterwards.

This technique, however, presents some recognized drawbacks in relation to long pasta such as spaghetti, linguine, fettuccine and the like. In fact, by depositing long pasta on belts or frames, it could happen that the strands of pasta stick together, sometimes resulting in incomplete drying, but above all their shape would be compromised, resulting in a loss of quality of the final product.

In order to overcome the aforementioned drawbacks, special production plants for long format pasta are known in which in the drawing step the pasta is directly rolled out on special support sticks having a longitudinal extension that can reach 2550 mm. In particular, the known spreaders can spread the pasta on a single stick or on several sticks, up to five or six times, that is, provided with five or six pasta descents, one for each support stick.

However, even these plants have some drawbacks, first of all the fact that the production of pasta is limited since there are maximum six sticks each with a maximum length of 2550 mm. In this sense, it is not possible to cope with increased production capacities of long pasta.

Moreover, in order to increase production, it is not possible to increase the plant speed beyond a certain limit as this could result in a loss of quality of the final product.

Documents US 2 583 847 A, EP 2 634 518 A1 are known, which, however, do not teach to increase the amount of long pasta produced while ensuring a high quality of the final product.

### Presentation of the invention

The object of the present invention is to at least partially overcome the drawbacks highlighted above by providing a long pasta production plant which allows increasing the amount of pasta produced in each production cycle.

In particular, an object of the present invention is to provide a long pasta production plant that allows to produce greater quantities of pasta without increasing production times.

It follows that an object of the present invention is to provide a long pasta production plant that is particularly efficient.

In addition, an object of the present invention is to provide a long pasta production plant that allows the quality of the final product to remain unchanged.

It follows that a further object of the present invention is to provide a long pasta production plant that allows a homogeneous drying of all the pasta produced.

Moreover, another object of the present invention is to provide a long pasta production plant that allows to prevent the pasta strands from breaking during the various steps of the production process thereof.

Said objects, as well as others which will become clearer below, are achieved by a long pasta production plant in accordance with the following claims, which are to be considered an integral part of the present patent.

In particular, the long pasta production plant comprises at least a first long pasta preparation area, at least a second long pasta spreading area generated on one or more support sticks each having two free ends and at least a third long pasta pre-drying and drying area.

Advantageously, the presence of the pasta support sticks makes it possible to keep the pasta threads at a distance from each other that allows them to avoid, still advantageously, sticking together.

It follows that, still advantageously, the above allows to obtain a homogeneous drying of pasta.

And not only that. The presence of the pasta support sticks prevents the long pasta from breaking throughout the production process.

All of the above makes it possible to obtain a quality product.

According to an aspect of the invention, the third area comprises at least one stick movement unit.

Advantageously, the presence of the handling group allows the sticks to be moved along the path of the long pasta production plant.

According to another aspect of the invention, the handling group is operatively connected to at least one pair of support chains for the two free ends of the sticks.

Advantageously, therefore, each free end of the sticks is arranged resting on a respective chain of the pair of chains. In this way the chains are moved along the path and the sticks that are arranged resting on the chains move with the latter.

According to a further aspect of the invention, the sticks have a longitudinal extension greater than 2550 mm.

Advantageously, the longer length of the sticks compared to the sticks of known pasta machines allows the support surface of the long pasta to be increased.

It follows, still advantageously, that this allows to support more long pasta than known plants with the consequent further advantage of increasing pasta production in each production cycle.

It follows that, still advantageously, the longitudinal extension higher than 2550 mm of the sticks allows to increase the amount of pasta produced while maintaining the traditional timing of the pasta production cycle at an industrial level.

According to another aspect of the invention, the handling group comprises at least a first kinematics of thrust of the chains and at least a second kinematics of traction of the chains themselves.

Advantageously, the presence of a thrust and pulling element of the chains allows to make the movement of the chains that transport the sticks particularly efficient.

In fact, having to transport a greater amount of pasta thanks to the sticks longer than 2550 mm, the presence of thrust and pulling kinematics allows to move the chains and the sticks supported by them with linearity. In particular, the greater weight that the sticks have to bear could negatively affect the movement of the chains that could misalign with each other, thus also entailing the risk of the sticks falling during transport.

### Brief description of the drawings

Further characteristics and advantages of the invention will become more apparent in the light of the detailed description of a preferred, but not exclusive, embodiment of a long pasta production plant, illustrated by way of non-limiting example with the aid of the attached tables of drawings in which:

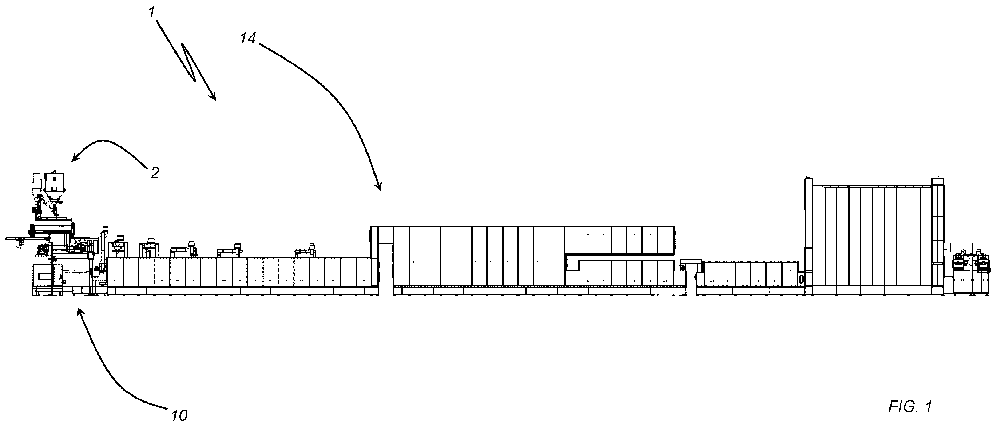

FIG. 1 represents a long pasta production plant according to the invention in side view;

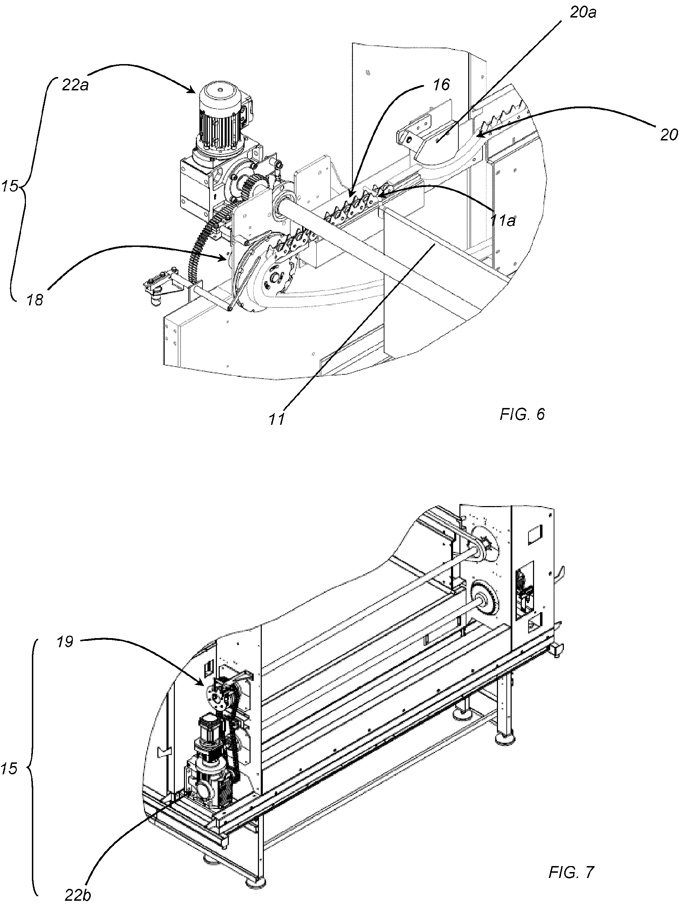

FIGS. 2 to 7 depict details of the plant of FIG. 1.

### Detailed description of some preferred embodiments

With reference to the aforementioned figures, a long pasta production plant **1** is described which comprises several areas, one for each step of the pasta production cycle.

In fact, according to an aspect of the invention, the plant **1** comprises a first long pasta preparation area **2.** In detail, the first area **2** comprises a kneader **3** where the ingredients contained within a bowl **4** are mixed by means of a plurality of blades **5** that are moved with rotary motion around an axis. In particular, the rotary motion performed by the blades **5** hits the inner perimeter of the bowl **4.**

Thereby, advantageously, the mixing of the totality of the ingredients is ensured avoiding, still advantageously, that a part of them remains attached to the walls and therefore discarded.

It follows, still advantageously, that what has been said allows to guarantee the correct homogeneity of the final product and, therefore, its quality.

In the figures it can be observed that there is also a second dough bowl **6,** but this aspect should not be limiting for the invention, as the number of bowls can be any according to production needs.

Once the dough has reached the appropriate consistency, it is transported inside a duct in which there is a compression screw **7** that pushes the dough towards a die **8** from which the dough comes out in the form of the desired pasta format.

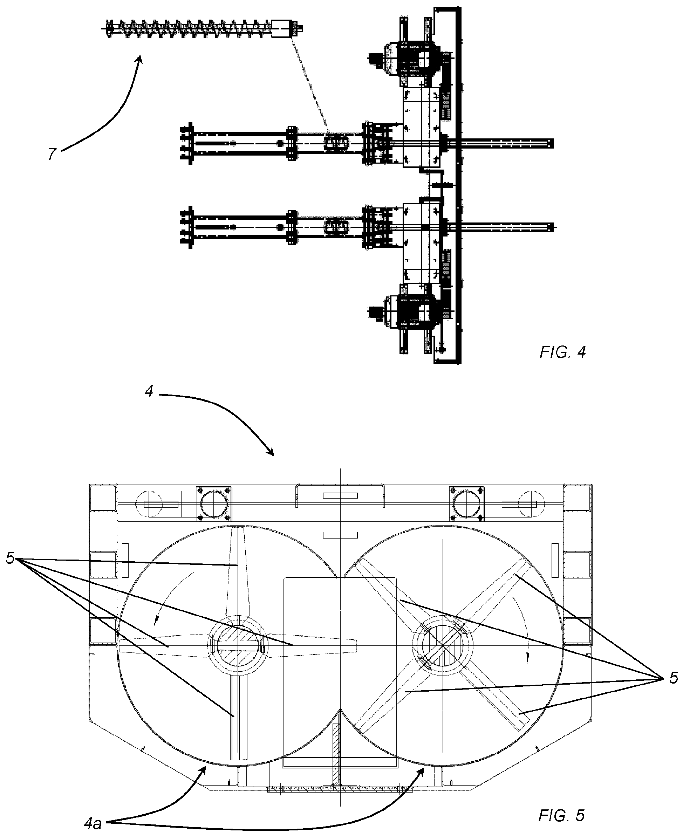

In the particular embodiment of the invention, as can be seen in Fig. 5, the bowl **4** of the kneader **3** comprises two portions with a circular section **4a** partially intersecting each other, each having a diameter of 702 mm. Given that the two aforementioned portions of the bowl of the kneaders installed in known industrial pasta production plants have a maximum diameter of 602 mm with the same shape of the bowl, the thus increased sizes allow to manage greater quantities of dough with respect to what occurs in equivalent pasta production plants of the prior art.

However, this aspect must not be considered limiting for different embodiments of the invention according to which, for example, there is a single bowl or it comprises more than two portions with a circular section or any section. The same applies to the size of the aforementioned portions and the shape of the bowl, which can be greater or less than 702 mm, or the bowl could be wider and lower or higher and narrower, without any limit for the present invention.

Moreover, according to another aspect of the invention, the compression screw **7** has a longitudinal extension equal to 3027 mm and a diameter of 260 mm.

Since the compression screws installed in the known industrial pasta production plants are typically maximum 2665 mm long and have a maximum diameter equal to 235 mm, the sizes of the compression screw **7** of the present invention allow to manage greater quantities of dough with respect to what occurs in the equivalent pasta production plants of the prior art.

The same applies to the die **8** which, in the embodiment described herein, is enlarged in size with respect to the known dies. In fact, the die **8** has a length equal to 1330mm and a width equal to 300mm compared to known dies which, in larger plants, typically measure 1230 mm in length and 250 mm in width.

Obviously, a larger size of the die allows a greater number of holes to be made through it. As a result, advantageously, an extrusion of more pasta is guaranteed in the same period of time with respect to what occurs with the known dies.

However, what has been said so far must not be considered limiting for different embodiments of the invention according to which, for example, both the compression screw and the die have smaller or greater measures than those indicated above.

According to another aspect of the invention, the long pasta production plant **1** also comprises a second area **10** for spreading the long pasta generated on a plurality of support sticks **11.**

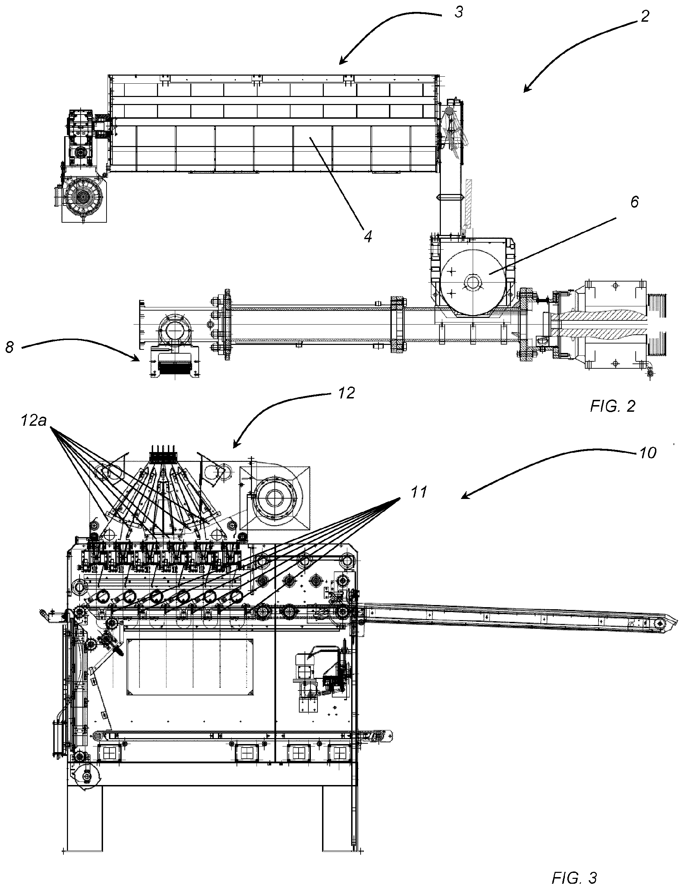

In this regard, it is noted that in the embodiment described herein the support sticks **11** are six in that, as can also be seen in Fig. 3, the second area **10** comprises a sixfold spreader **12.** In other words, the spreader **12** comprises six descents **12a** for spreading the dough on the six support sticks **11.**

Advantageously, the sixfold spreader **12** and the six support sticks **11** allow, once again, to produce a greater quantity of pasta in the same production cycle, unlike what happens, for example, in equivalent pasta production plants that have a fivefold spreader.

However, both the fact that it is a sixfold spreader **12** and the number of support sticks **11,** it is noted that they should not be considered limiting characteristics for different embodiments of the invention according to which, for example, the spreader has less than six descents and, consequently, the sticks are less than six in number, that is, they are as many as the descents of the spreader.

However, advantageously, the presence of the sticks **11** makes it possible to spread the long pasta on them. In particular, the pasta strands are placed on the support sticks **11** side by side as they exit the die **8** and, once they have reached the desired length, they are cut by means of a special cutting tool.

Still advantageously, this makes it possible to prevent the pasta strands from overhanging one another excessively.

Moreover, still advantageously, what has been said above makes it possible to obtain a homogeneous drying of the pasta.

It follows, still advantageously, that the above allows to obtain a quality final product.

According to an aspect of the invention, the support sticks **11** have a longitudinal extension greater than 2550 mm, i.e. the typical length of the sticks present in larger long pasta production plants. In particular, in the particular embodiment described herein, said longitudinal extension is close to 2750 mm.

Advantageously, the greater length of the sticks **11** compared to the sticks of the known pasta machines makes it possible to increase the support surface of long pasta.

Still advantageously, the increase in the length of the sticks **11** allows, once again, to increase the amount of pasta produced with a production cycle, while advantageously maintaining the classic timing of the pasta production cycle at an industrial level.

It follows, still advantageously, that the above also allows for a reduction in the production time for long pasta compared to equivalent plants using the prior art.

And not only that. The above also allows cost savings, being able to produce a greater amount of pasta in the same production cycle and in the same time in which less pasta was produced in the known plants.

It is noted, however, that the choice to lengthen the support sticks **11** and not to increase, on the contrary, the number of descents **12a** of the spreader **12** beyond six is not accidental.

In fact, in order to obtain a quality product, that is, in which the pasta strands are all very similar to each other in the amount of product of which they are made and therefore in their relative consistency, increasing the number of descents to more than six and, consequently, inserting more sticks, the pasta strands that would be extruded from the outermost holes of the die would not have the same amount of dough and texture of the final product. In fact, the wider the die and the spreader, the greater the effort that the compression screw should make to push the dough with the right intensity towards the ends of the die. To this end, it would be necessary to increase the speed of rotation of the compression screw and, consequently, there would be a risk of overheating the dough with consequent loss of quality of the final product.

Moreover, increasing the number of sticks and relative descents from the die would have the consequence that the outermost descents would have a too little accentuated inclination to guarantee the correct descent of pasta from the die to the sticks.

In view of the above, it is therefore evident the considerable advantage offered by the increase in the longitudinal extension of the support sticks **11.**

According to another aspect of the invention, the long pasta production plant 1 also comprises a third area **14** for pre-drying and drying the pasta which, in the embodiment described herein, comprises for the drying part an oven of the multi-storey type, without this obviously constituting a limit for the present invention.

In detail, the third area **14** comprises a handling group **15** of the sticks **11** operatively connected to a pair of support chains **16** which each support a free end **11a** of the sticks **11.**

Advantageously, the presence of the handling group **15** of the chains **16** on which the free ends **11a** of the sticks **11** rest allows the latter to be moved along a translation path identified by the chains **16** inside the production plant **1** until the completion of the pasta production cycle.

Since, as mentioned, the sticks **11** are longer than those provided for known plants in order to increase the production of pasta, the management of their transport on a pair of chains **16** supporting the ends thereof requires special attention. In fact, although there may be a single motorisation for the movement of both chains **16,** it is evident that the transport of motion from that motorisation to each chain **16** of the torque may not be perfect, thereby causing misalignments between the chains **16** themselves. The elongation of the sticks **11** necessarily entails a widening of the distance between the chains **16,** making the phenomenon of misalignment more dangerous than the equivalent known plants.

To overcome this drawback, according to another aspect of the invention, the handling group **15** comprises a first thrust kinematics **18** of the chains **16** and a second traction kinematics **19** thereof.

Advantageously, the presence of the double kinematics, that of thrust **18** and that of traction **19,** allows the chains **16** and therefore the sticks **11** which are arranged resting on them to be moved efficiently. In fact, it is particularly useful in the production plant **1** of the invention since a large amount of pasta is managed therein and, consequently, the chains **16** are strongly stressed by the weight thereof.

In fact, having to transport a greater amount of pasta thanks to the sticks **11** that are longer than 2550 mm, the presence of the first thrust kinematics **18** and the second traction kinematics **19** allows to move the chains **16** and the sticks **11** supported by them with linearity. In particular, the addition of a thrust to the movement of the chains **16** allows limiting, if not zeroing, the possible mutual misalignments, overcoming the drawback highlighted above.

It follows, still advantageously, that the presence of the first thrust kinematics **18** and the second traction kinematics **19** allows to maintain the mutual alignment between the chains **(16)** constituting the pair of chains **(16).**

Still advantageously, the traction and thrust of the chains **16** allows to limit the stretching thereof while preserving their mechanical integrity.

Moreover, according to another aspect of the invention, each translation path of each chain of the pair of chains **16** comprises a depression section **20** at which a pendulum **20a** is arranged so as to force a setting of the respective chains **16** inside the depression **20.**

Advantageously, the presence of the depression **20** allows to align the chains **16** in case of misalignment of the same.

Moreover, still advantageously, the presence of the depression **20** makes it possible to avoid any accumulations of each chain of the pair of chains **16.** In fact, with the tendency to create such accumulations, which is moreover accentuated by the thrust kinematics **18,** the presence of the depression with the respective downward thrust pendulum allows this phenomenon to be corrected and avoided.

However, what has been said is not to be considered a limiting characteristic for different embodiments of the invention, both with reference to the presence of the depression and the pendulum and with reference to the number of depressions and respective pendulums along the path of translation of the chains that in different embodiments, for example, are more than one.

In the particular embodiment described herein, the movement is allowed thanks to the presence of a thrust gearmotor **22a** and a traction gearmotor **22b** to generate the motion of the first thrust kinematics **18** and the second traction kinematics **19.** The two gearmotors **22a** and **22b** are suitably synchronized by means of a typically electronic control.

Advantageously, such a configuration allows to keep the chains **16** constantly synchronized with each other.

It follows that the handling group **15** thus described makes it possible to obtain a long pasta production plant **1** that is particularly efficient in movement the pasta throughout the production cycle.

This should not be considered limiting for different embodiments of the invention with reference to the two kinematic mechanisms. For example, there are embodiment variants where the two kinematics provide for the use of a single motor and two separate mechanical transmissions (including also reducers). Obviously, in this case an electronic control is not essential for synchronization.

Operationally, the ingredients are first introduced into the bowl **4** in which they are mixed thanks to the presence of the blades **5** which, by rotating around the axis, perform a rotary motion that hits the inner perimeter of the bowl **4** collecting all the ingredients in order to obtain a balanced and homogeneous dough.

Once the ingredients have been mixed, the dough is pushed thanks to the compression screw **7** towards the die **8** which, as anticipated, allows pasta to be given the desired format thanks to the presence of appropriate through holes on it. Once formed, the pasta descends along special descents **12a** of the spreader **12** at the end of each of which there is a long pasta support stick **11,** the ends **11a** of which are each arranged to rest on a chain of the pair of chains **16.** Once the pasta is laid on the sticks **11,** the pair of chains **16** is moved along the translation path to reach the pre-drying oven and the drying oven in the third area **14** of the long pasta production plant 1 of the invention.

In particular, the movement of the chains **16** not only with traction but also with thrust together with the effect of the respective depression sections **20** allows to limit the misalignments between the chains **16** despite the longer length of the sticks **11** and the greater weight they support.

In light of the foregoing, it is understood that the long pasta production plant according to the invention achieves all the intended purposes.

In particular, it allows to increase the amount of pasta produced in each production cycle.

In detail, the long pasta production plant of the invention allows to produce greater quantities of pasta without increasing the production times.

This means that it has been made particularly efficient.

In addition to this, the long pasta production plant of the invention allows to maintain the quality of the final product unchanged.

In fact, the long pasta production plant of the invention allows a homogeneous drying of all the pasta produced.

Moreover, it makes it possible to prevent the pasta strands from breaking during the various steps of the pasta production process.

The invention is subject to numerous modifications and variations, all falling within the appended claims. All the details may be replaced by other technically equivalent elements, and the materials may be different according to requirements, without departing from the scope of protection of the present invention.

## Claims

1. A long pasta production plant comprising:
- at least one first long pasta forming area **(2);**
- at least one second long pasta spreading area **(10)** generated on one or more support sticks **(11)** each having two free ends;
- at least one third area **(14)** for pre-drying and drying the long pasta, said at least one third area **(14)** comprising at least one handling group **(15)** of said one or more sticks **(11),** said handling group **(15)** being operatively connected to at least one pair of support chains **(16)** for said two free ends of said one or more sticks **(11),**
said plant **(1)** being **characterized in that:**
- said one or more sticks **(11)** have a longitudinal extension greater than 2550 mm;
- said handling group **(15)** comprises at least a first thrust kinematics **(18)** of said chains **(16)** and at least a second traction kinematics **(19)** of said chains **(16),** so as to maintain a mutual alignment between said chains **(16)** of said at least one pair of chains **(16).**

2. Long pasta production plant according to claim 1, **characterized in that** said at least one second spreading area **(10)** comprises at least one sixfold spreader **(12)** for spreading the pasta on at least six support sticks **(11).**

3. Long pasta production plant according to claim 1 or 2, **characterized in that** said handling group **(15)** comprises at least one thrust gearmotor **(22a)** and at least one traction gearmotor **(22b)** for generating the motion of said at least one first thrust kinematics **(18)** and at least one second traction kinematics **(19).**

4. Long pasta production plant according to one or more of the preceding claims, **characterized in that** each of said support chains **(16)** identifies a respective translation path, said respective translation path comprising at least one depression section **(20)** so as to allow an alignment of said chains **(16).**

5. Long pasta production plant according to one or more of the preceding claims, **characterized in that** said longitudinal extension of said one or more sticks **(11)** is at least close to 2750 mm.

6. Long pasta production plant according to one or more of the preceding claims, **characterized in that** said at least a third area **(14)** comprises a drying oven of the multi-storey type.

7. Long pasta production plant according to one or more of the preceding claims, **characterized in that** said at least one first forming area **(2)** comprises at least one kneader **(3)** having one or more blades **(5)** for kneading one or more ingredients contained within at least one bowl **(6),** said one or more blades **(5)** being moved with rotary motion around an axis, said rotary motion hitting the internal perimeter of said at least one bowl **(6).**

8. Long pasta production plant according to one or more of the preceding claims, **characterized in that** said at least one bowl **(6)** comprises at least two portions with a circular section **(4a)** partially intersected, each of said at least two portions with a circular section **(4a)** having a diameter of 702 mm.

9. Long pasta production plant according to claim 7 or 8, **characterized in that** said at least one kneader **(3)** comprises:
- at least one compression screw (7) having a longitudinal extension equal to 3027 mm and a diameter of 260 mm;
- at least one die **(8)** having a length equal to 1330 mm and a width equal to 300 mm.
